# EUROPEAN PATENT APPLICATION

(11) **EP 3 217 037 A1**
(43) Date of publication of application: **13.09.2017**
(21) Application number: 17000260.4
(22) Date of filing: 16.02.2017
(51) Int. Cl.: F16F 15/129, F16D 13/64

(54) **VEHICLE CLUTCH DRIVEN PLATES**

(30) Priority: 01.03.2016 GB 201603534
(71) Applicant: Raicam Clutch Limited, West Midlands B3 2AS (GB)
(72) Inventor: Child, David Stephen, Leamington Spa, Warwickshire CV33 9ST (GB)
(74) Representative: Morrall, Roger

(57) **Abstract**

A vehicle clutch driven plate has an outer annular friction member designed to be clamped between a clutch pressure plate and an associated vehicle engine flywheel to transmit drive through the driven plate to a driven plate output hub. Circumferentially acting damping springs act between the outer annular friction member and the output hub to allow the friction member and hub to move circumferentially relative to each other when drive is transmitted through the driven plate to damp torsional vibrations in an associated vehicle driveline. Friction damper members are connected for rotation with the outer annular friction member and output shaft respectively and are biased into engagement by bias means to provide frictional resistance to the relative rotation of the annular outer friction member and the output shaft. A ramp type friction damper actuator means is arranged so that relative rotation between the annular outer friction member and the output shaft causes axial expansion of the ramp type actuator which displaces the bias means to increase the bias force applied to the friction damping members and thus the level of friction damping applied to this relative rotation. The bias means comprises a spring bias member having an inner contact area which acts on the ramp type actuator and a radially outwardly extending arm portions whose outer ends are connected for rotation with the outer annular friction member.

## Description

This invention relates to vehicle clutch driven plates for use in vehicle drivelines which include rotary dampers for damping torsional vibrations which occur in such drivelines. It is often difficult to arrange the rotary dampers of such driven plates to attenuate the wide range of frequencies encountered in certain vehicle drivelines.

For example, when a vehicle is provided with the ability to deactivate one or more engine cylinders for reasons of fuel economy this introduces a wide variety of torsional frequencies which can be difficult to attenuate with a conventional driven plate rotary damping arrangement.

It is an object of the present invention to provide an improved form of clutch driven plate which includes a damping arrangement which helps to reduce the above problems associated with such rotary driveline dampers.

Thus according to the present invention there is provided a vehicle clutch driven plate which has an outer annular friction member designed to be clamped between a clutch pressure plate and an associated vehicle engine flywheel to transmit drive through the driven plate to a driven plate output hub, circumferentially acting damping springs acting between the outer annular friction member and the output hub which allow the friction member and hub to move circumferentially relative to each other when drive is transmitted through the driven plate to damp torsional vibrations in an associated vehicle driveline, friction damper members connected for rotation with the outer annular friction member and output shaft respectively and biased into engagement by bias means to provide frictional resistance to the relative rotation of the annular outer friction member and the output shaft, and a ramp type friction damper actuator means arranged so that relative rotation between the annular outer friction member and the output shaft causes axial expansion of the ramp type actuator to displace the bias means to increase the bias force applied to the friction damping members and thus the level of friction damping applied to this relative rotation, the driven plate being characterised in that the bias means comprises a spring bias member having an inner contact area which acts on the ramp type actuator and a radially outwardly extending arm portions whose outer ends are connected for rotation with the outer annular friction member.

With such an arrangement the higher the level of torque transmitted through the clutch the further the outer annular friction member and output shaft will be rotated relative to each other against the action of the circumferentially acting damping springs and thus the higher the level of friction damping which is provide to this relative rotation.

The driven plate is thus capable of dealing with a wide range of operation conditions such as are likely to be encountered when used with an engine having cylinder deactivation.

The circumferentially acting damper springs may conveniently act between a drive flange which rotates with the output hub and retainer plates located one on each side of the drive flange and which rotate with the outer annular friction member and the spring bias member may be located axially outside and to one side of the retaining plates and may act on the ramp actuator via a central aperture n the adjacent retaining plate.

The outer ends of the arms of the spring bias member may be connected with the retainer plates.

In one form of the invention the friction damper members themselves incorporate cooperating ramp surfaces to provide the ramp type actuator.

An additional friction damper member may be provided which is connected with the output hub and which is biased into contact with a component which rotates with the outer annular friction member and is acted on by the bias means and the ramp type actuator to further increase the friction damping.

The additional friction damping member may act against the inside of one of the retainer plates

The present invention will now be described, by way of example only, with reference to the accompanying drawings in which:

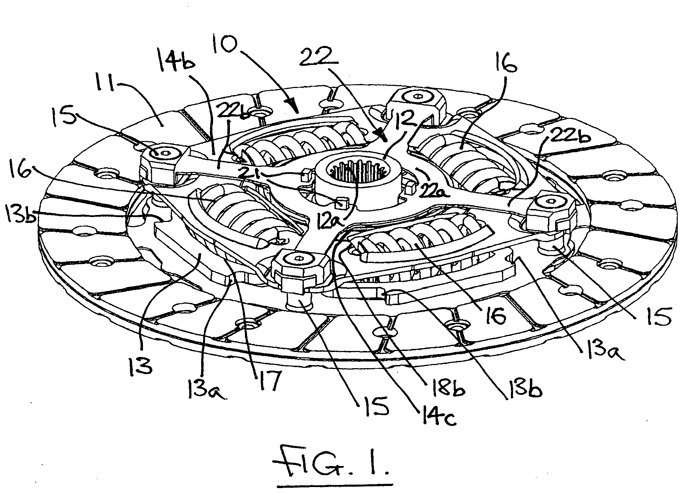

Figure 1 shows a perspective view of a clutch driven plate in accordance with the present invention;

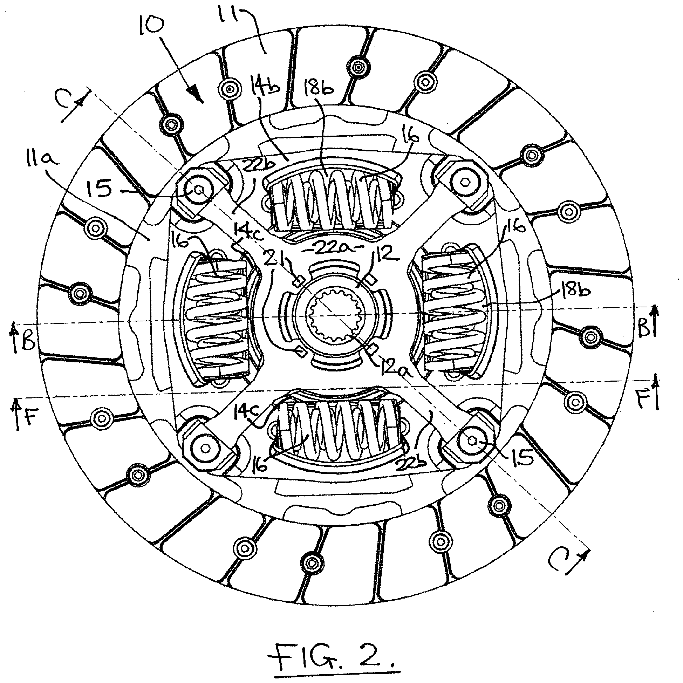

Figure 2 shows a plan view of the driven plate of Figure 1;
Figure 3 shows a_section on the line B-B of Figure 2;
Figure 4 shows a section on the line C-C of Figure 2;
Figure 5 shows a section on the line F-F of Figure 2;
Figure 6 shows a plan view of a spring disc and output hub flange in a non-driving condition;
Figure 6A shows a section on the line D-D of Figure 6;
Figure 7 shows a plan view of a spring disc and output hub flange in a driving condition, and
Figure 7A shows a section on the line E-E of Figure 7.

Referring to the drawings a vehicle clutch driven plate 10 has an outer annular friction member 11 designed to be clamped between a clutch pressure plate and an associated vehicle engine flywheel to transmit drive through the driven plate to a driven plate output hub 12 having splines 12a for connection with a drive shaft (not shown) for connection with an associated gearbox.

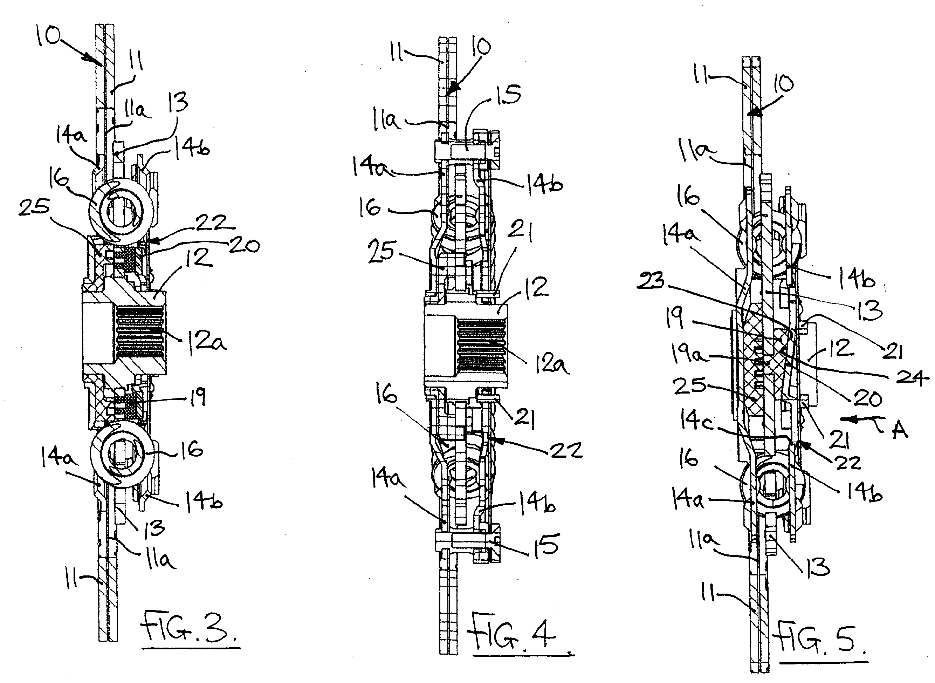

The driven plate has a central portion which includes an annular drive flange 13 coupled with the output hub 12 (see Figure 4). A pair of annular retaining plates 14a and 14b are position one on each side of drive flange 13. Friction members 11 is supported from retaining plate 14a via a spring steel disc portion 11a which is secured to the retaining plates 14a and 14b by connectors 15 (see Figure 4). The retaining plates 14a and 14b are rotationally coupled in the known manner with the drive flange 13 via circumferentially acting damping springs 16 disposed in cut outs 17 in flange 13 and windows 18a and 18b in retaining plates 14a and 14b. Springs 16 allow the retaining plates and central drive flange to move circumferentially relative to each other when drive is transmitted through the driven plate to damp torsional vibrations in an associated vehicle driveline. This circumferential movement of the retainng plates 14a and 14b relative to the drive flange 12 is limited by the possible range of movement of connectors 15 between stop abutments 13a and 13b on flange 13.

In accordance with the present invention friction damper members are provided in the form of a friction washer 19 which is coupled for rotation with flange 13 via lugs 19a and a cooperating friction member 20 which is riveted at 21 to a spring plate 22. Spring plate 22 has an inner contact area 22a which acts on the friction member 20 and radially outwardly extending arm portions 22b whose outer ends are connected for rotation with the retainer plates 14a and 14b by connectors 15. Spring plate 22 is arranged to apply a force on friction member 20 and washer 19 in the direction of arrow A of Figure 5 which generates frictional resistance to the relative rotation of retaining plates 14a and 14b and flange 13. A ramp type actuator is provided in the form of ramp surfaces 23 on washer 19 and cooperating follower surfaces 24 on friction member 20.

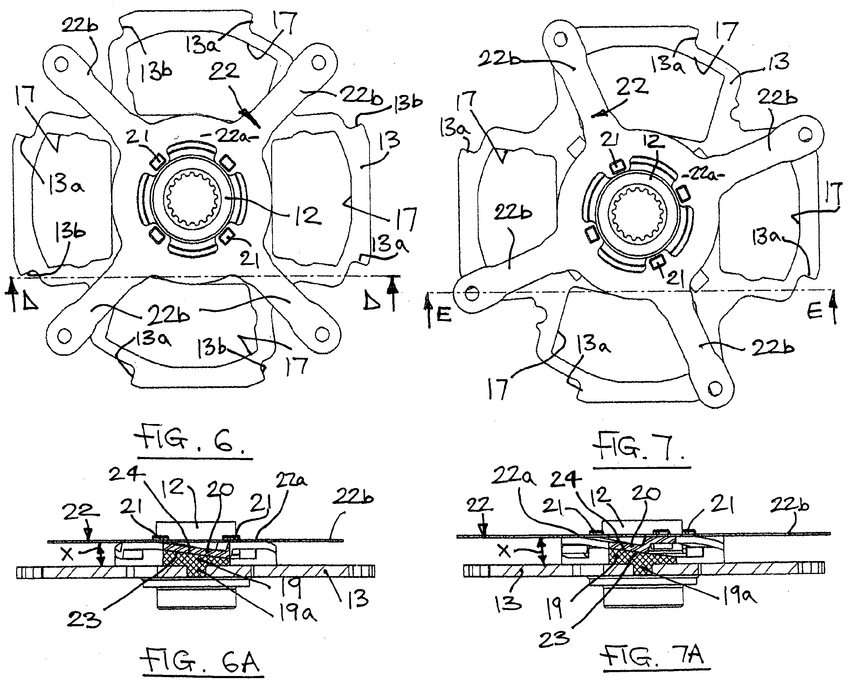

Thus as torque is transmitted through the driven plate, the flange 13 and retaining plates 14a and 14b rotate relative to each other and the washer 19 also rotates relative to the friction member 20 so that the ramp surfaces 23 and 24 move relative to each other (See Figure 7A) thus increasing the axial dimension X of the members 19 and 20 so that spring plate 22 is moved away from friction washer 19 thus increasing the friction bias applied to the cooperating friction members 19 and 20 by the spring plate 22 via the central aperture 14c in retaining plate 14b. Thus the further the retaining plates and flange are rotated relative to each other the higher the frictional damping force which is applied by the cooperating friction members 19 and 20.

In the design show an additional friction damper member is provided in the form of a low friction washer 25 which rotates with the flange 13 and makes frictional contact with the inside of retaining plate 14a. The increased bias force applied to contacting friction members 19 and 20 by spring plate 22 also acts on low friction washer 25 via flange 13 and hub 12 to increase the friction damping provided by this washer 25 as the relative rotation between the flange 13 and retaining plates 14 a and 14b increases.

Whilst the ramp actuator provided by by surfaces 23 and 24 is described above as an integral part of the cooperating friction members 19 and 20, if desired the ramp surfaces can be provided on separate components which force flat friction members into contact with each other.

Thus the ability to provide an increasing level of friction damping dependent on the level of torque being transmitted through the driven plate means that the driven plate is capable of dealing with a wide range of operation conditions such as are likely to be encountered when used with an engine having cylinder deactivation.

The spring arrangement of the present invention also offers the advantage of the direct connection of the inner friction member 20 with the outer friction member 11 via the arms 22b of spring 22 thus avoiding any backlash which provides a very quick to react damping arrangement. Further, the damping package is very compact with the spring occupying a position close to the retaining plate 14b when the clutch is not engaged and being free to move away from plate 14b when the clutch is engaged without contacting any surrounding structure.

## Claims

1. A vehicle clutch driven plate (10) which has an outer annular friction member (11) designed to be clamped between a clutch pressure plate and an associated vehicle engine flywheel to transmit drive through the driven plate to a driven plate output hub (12), circumferentially acting damping springs (16) acting between the outer annular friction member (11) and the output hub (12) which allow the friction member and hub to move circumferentially relative to each other when drive is transmitted through the driven plate to damp torsional vibrations in an associated vehicle driveline, friction damper members (19,20) connected for rotation with the outer annular friction member (11) and output shaft (12) respectively and biased into engagement by bias means (22) to provide frictional resistance to the relative rotation of the annular outer friction member and the output shaft, and a ramp type friction damper actuator means (23,24) arranged so that relative rotation between the annular outer friction member (11) and the output shaft (12) causes axial expansion of the ramp type actuator (23,24) which displaces the bias means (22) to increase the bias force applied to the friction damping members (19,20) and thus the level of friction damping applied to this relative rotation, the driven plate being **characterised in that** the bias means comprises a spring bias member (22) having an inner contact area (22a) which acts on the ramp type actuator (23,24) and a radially outwardly extending arm portions (22b) whose outer ends are connected for rotation with the outer annular friction member (11).

2. A driven plate according to claim 1 **characterised in that** the circumferentially acting damper springs (16) act between a drive flange (13) which rotates with the output hub (12) and retainer plates (14a,14b) located one on each side of the drive flange and which rotate with the outer annular friction member (11) and **in that** the spring bias member (22) is located axially outside and to one side of the retaining plates (14a,14b) and acts on the ramp actuator (23,24) via a central aperture (14c) in the adjacent retaining plate (14b).

3. A drive plate according to claims 1 or 2 **characterised in that** the outer ends of the arms (22b) of the spring bias member (22) are connected with the retainer plates (14a,14b).

4. A driven plate according to any one of claims 1 to 3 **characterised in that** the friction damper members (19,20) themselves incorporate cooperating ramp surfaces (23,24) to provide the ramp type actuator.

5. A driven plate according to any one of claims 1 or 4 **characterised in that** an additional friction damper member (25) is provided which is connected with the output hub (12) and which is biased into contact with a component (14a) which rotates with the outer annular friction member (11) and is acted on by the bias means (22) and the ramp type actuator (23,24) to further increase the friction damping.

6. A drive plate according to claim 5 **characterised in that** the additional friction damping member (25) acts against the inside of one of the retainer plates (14a).
